# EUROPEAN PATENT APPLICATION

(11) **EP 4 546 008 A1**
(43) Date of publication of application: **30.04.2025**
(21) Application number: 24208758.3
(22) Date of filing: 24.10.2024
(51) Int. Cl.: G01S 7/481, G01S 17/86, G01S 17/931

(54) **EXTERNAL SENSOR ARRAY HOUSING FOR EQUIPMENT OPERATING IN HIGH HAZARD FORESTRY ENVIRONMENTS**

(30) Priority: 24.10.2023 US 202363592856 P
(71) Applicant: Earth Force Technologies, Inc., Oregon Eugene 97405 (US)
(72) Inventor: GRUNNAN, Rikard, Tiburon, 94920 (US); STANEFF, Geoffrey, Woodinville, 98077 (US); SHAVIT, Alon, Kadima-Zoran (IL); LIVNEH, Ron, Tel-Aviv (IL)
(74) Representative: D Young & Co LLP

(57) **Abstract**

An external sensor array housing projects sensor in a hazardous forestry environment in which there are tree falls, tree limb impacts, and tree debris. The external sensor array housing may be mounted to a suitable external portion of a forestry vehicle, such as on the roof. A variety of protective features are provided against tree strikes, tree limb impacts, and tree debris.

## Description

### CROSS REFERENCE TO RELATED APPLICATIONS

The present application claims priority to provisional application 63/592,856, filed on October 24, 2023.

### FIELD OF THE INVENTION

The present disclosure generally relates to the protection of external sensor arrays in forestry vehicles used for forestry management.

### BACKGROUND

There are a variety of different types of forestry vehicles that can be used in remote forestry environments. However, there are a variety of special problems associated with operation of forestry equipment. Forestry management in remote areas has hazards such as tree strikes.

### SUMMARY

An external sensor array housing for a forestry machine includes features to protect the housing from damage from tree strikes, tree limb strikes, and tree limb impingement. In one implementation, ribs with protruding sections extend from a peak of a pyramidal-shaped housing to a base. Additional protection is provided by side panels and other features.

In one implementation an external sensor array housing for a forestry vehicle, includes: a housing having a chamber in a lower section and a sensor bay portion in an upper section for housing at least one sensor of a sensor array, wherein the upper section is narrower than the lower section; rib sections disposed on at least the exterior edges of a pyramidal-shaped housing and extending from a peak above the sensor bay to a base section of the pyramidal-shaped house to deflect tree strikes from the sensor bay portion and spread the load of tree strikes; and side panels around at least the lower section to deflect tree debris.

In one implementation, the sensor array, further includes an attachment mechanism to detachably attach a lower surface of the pyramidal shape housing onto an exterior portion of roof of a cab of a forestry vehicle with 1) a force sufficient to restrain the pyramidal housing during ordinary use of the forestry vehicle; and 2) detach the pyramidal shaped housing during a forestry vehicle rollover event. In one implementation, the attachment mechanism includes a magnetic attachment mechanism that is switchable on and off.

In one implementation of the external sensor array housing, the sensor bay is configured to house a sensor module including at least one of a camera and a LIDAR.

In one implementation, the chamber of the lower section is configured to house a compute unit with a signal bus connecting the sensor bay and the chamber.

In one implementation, the rib sections are tapered to have a reduced width near the sensor bay.

In one implementation, the external sensor array housing is cantilevered.

In one implementation an external sensor array housing for a forestry vehicle, includes: a housing having a chamber in a lower section and a sensor bay portion in an upper section for housing at least one sensor of a sensor array, wherein the upper section is narrower than the lower section; rib sections disposed on at least the exterior edges of the housing and extending from a peak above the sensor bay to a base section of the housing to deflect tree strikes from the sensor bay portion and spread the load of tree strikes; and side panels around at least the lower section to deflect tree debris.

As another example, in one implementation a safety external sensor array housing for a forestry vehicle, includes: a generally pyramidal-shaped housing having a chamber in a lower section and a sensor bay portion in an upper section for housing at least one sensor of a sensor array requiring a line-of-sight view for a forestry vehicle, wherein the upper section is narrower than the lower section; protruding ribs forming exterior edges of the pyramidal shaped housing to deflect tree strikes from the sensor bay portion and dissipate the energy of tree strikes; side panels around at least the lower section to deflect tree debris; a roof section projecting the sensor bay portion; and
an attachment mechanism to attach a lower surface of the pyramidal housing onto an exterior portion of roof of a cab of a forestry vehicle during normal use but automatically detach during a forestry vehicle rollover event.

Another example of a safety external sensor array housing for a forestry vehicle, includesa housing having a chamber in a lower section and a sensor bay portion in an upper section for housing at least one sensor of a sensor array requiring a line-of-sight view for a forestry vehicle, wherein the upper section is narrower than the lower section;
an attachment mechanism to attach a lower surface of the housing onto an exterior portion of roof of a cab of a forestry vehicle during normal use but automatically detach during a forestry vehicle rollover event.

### BRIEF DESCRIPTION OF THE DRAWINGS

The present disclosure is illustrated by way of example, and not by way of limitation, in the figures of the accompanying drawings in which like reference numerals are used to refer to similar elements.
Figure 1 is a diagram illustrating a side view of a forestry vehicle having roof-mounted external sensors in a non-optimized arrangement.
Figure 2 is a diagram illustrating a side view of a forestry vehicle having a pyramidal-shaped housing in accordance with an implementation.
Figure 3 is a block diagram illustrating decoupled pyramid shaped housings in accordance with an implementation.
Figure 4 is a diagram of a pyramidal sensor array housing in accordance with an implementation.
Figure 5 is a diagram of a decoupled pyramidal sensor array housing in accordance with an implementation.
Figure 6 is a perspective view illustrating an example of a pyramidal sensor array housing, including a sensor array module, in accordance with an implementation.
Figure 7 illustrates an example of a sensor array module in accordance with an example.
Figure 8 is a perspective view illustrating an example of a pyramidal sensor array housing, omitting the sensor array module, in accordance with an implementation.
Figure 8A illustrates pyramid side height and pyramid height of the housing of Figure 8.
Figure 9 is a break away view of the pyramidal sensor array housing, showing some panels and ribs removed for illustration in accordance with an implementation.
Figure 10 is a perspective view of the examples of Figure 8 showing a view into the lower chamber in accordance with an implementation.
Figure 11 is a side view into a decoupled pyramid housing looking into a sensor bay for housing an individual sensor in accordance with an implementation.
Figure 12 illustrates a view of the decoupled pyramid housing from a side view showing horizontal trays and vertical rib blades in accordance with an implementation.
Figure 13 shows another perspective view showing side panels installed on some portions of decoupled pyramid with other side panels removed to show the horizontal trays and vertical rib blades in accordance with an implementation.
Figure 14 is a view showing the four faces of the pyramid with one face with the sensor bay having a wider field of view in accordance with an implementation.
Figure 15 illustrates a cantilevered pyramidal design, showing aspects of the rib blades and horizontal trays in accordance with an implementation.
Figure 16 illustrates a side view into a portion of a cantilevered pyramidal design in accordance with one implementation.
Figure 17 illustrates a view into a portion of a cantilevered pyramidal design in accordance with one implementation.
Figure 18 illustrates a view into a portion of a cantilevered pyramidal design in accordance with one implementation.
Figures 19A and 19B illustrate edge ribs can be tapered to improve the sensor field of view.
Figure 20 illustrates an example of a tapered design in accordance with an implementation.
Figure 21 illustrates an example of a subsystem for orchestrating the detachment of the external sensor housing in accordance with an implementation.

### DETAILED DESCRIPTION

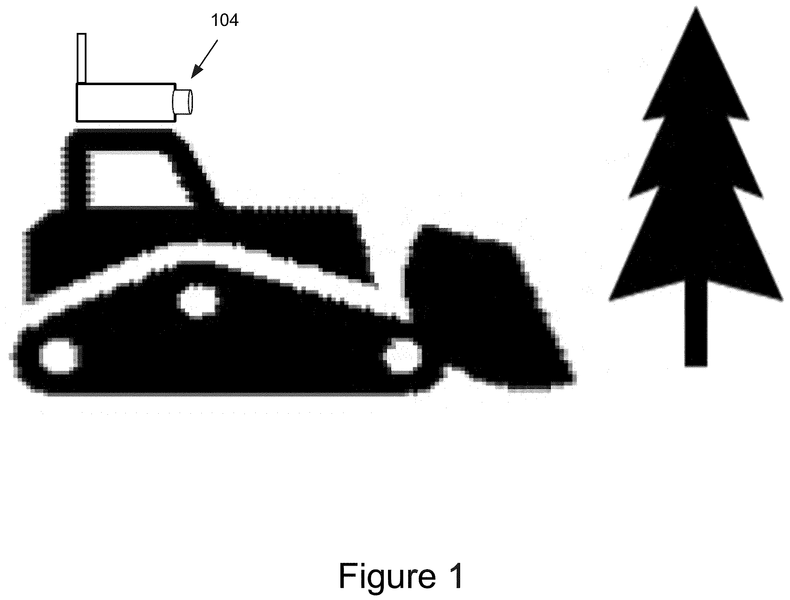

Figure 1 illustrates some general problems in implementing an external sensor array on a forest vehicle. There may be trees intentionally trimmed/fallen/processed as part of a forestry management plan. A simplistic approach would be to mount cameras, LIDAR, GPS antennas, or other sensors on top of the cab of the forestry vehicle, which can be of different types. In forestry management a variety of different types of equipment may be used. Some examples of forestry equipment include bulldozers, forwarders, feller-bunchers, skidders, tree processors, and cut-to-length tree harvesters. There are other examples such as mulchers, chippers, planters, etc.

A variety of sensors may be attached to a piece of forestry equipment, such as a camera, LIDAR, GPS, etc. Sensors may, for example, be used for different purposes such as to identify the location of a piece of forestry equipment, identify trees trimmed, and provide information to a management portal. Also, sensors may be used to aid in navigation and control of the operation of a remote-controlled forestry vehicle.

Some types of sensors require a compute unit (e.g., a computing device with a processor and memory operating in a node associated with a remote vehicle to perform processing tasks) to operate the sensor and perform initial processing of sensor data. There may also be networking with other processors in a piece for forestry equipment. There may also be networking of sensor data with other pieces of forestry equipment, with remote human operators, with a remote operations center, etc.

Placing an external sensor array on the roof of the cab has advantages like improved field of view. However, it also had several potential disadvantages.

In the example of Figure 1, some sensors may protrude outside a protective flat panel 104. However, the flat panel may provide unsatisfactory protection. In a forestry management environment, there are falling tree limbs and falling trees that can crash down and either crush or knock off the external sensor array. Hanging tree limbs may also be struck when a forestry vehicle is moved such that there are also lateral impacts. There may also be tree debris that builds up and strikes the external sensor in the example of Figure 1. As a result, an external sensor array such as that illustrated in Figure 1, can be brushed off and ground under the forestry vehicle. There will be direct tree strikes from the top, strikes of tree limbs from the sides, and also tree debris that can build up and push against an external sensor array.

Another potential disadvantage is that the approach of Figure 1 may be incompatible with a roll over protection system and a cab roof escape hatch. There are safety regulations in the United States and many other countries for the protection of human operators in human operated vehicles.

A forestry environment is a challenging environment for mounting external sensors to forestry vehicles, including human-operated and remote-controlled vehicles.

Some desirable features for an external sensor array housing include:
1. An External Sensor Array Housing That Is Attachable/Detachable Such that It Is Swappable;
2. Load Dissipation And Deflection Features For Enhanced Survivability of Sensors/Compute Units Despite Falling Trees, Falling Tree Limbs and Pileups of Tree Debris;
4. Safety Features For Manned Operations In Hazardous Operating Environments;
3. Features For Improving Sensor View (field of view, angular visibility, angle of incidence, prominence of sensor);
4. Acceptable Size of Module;
5. Thermal management Supported; and
6. Environmental Sealing Supported;

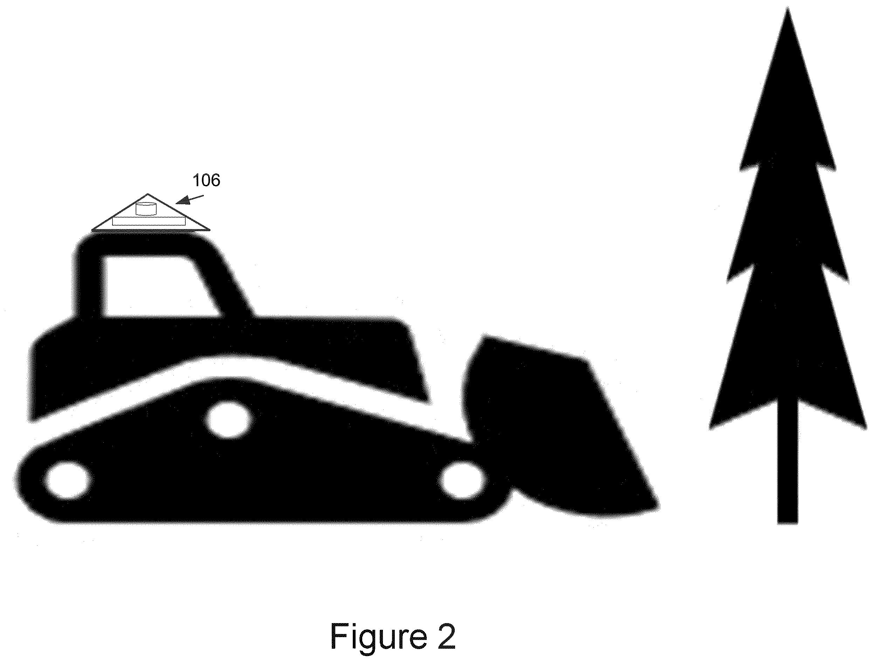

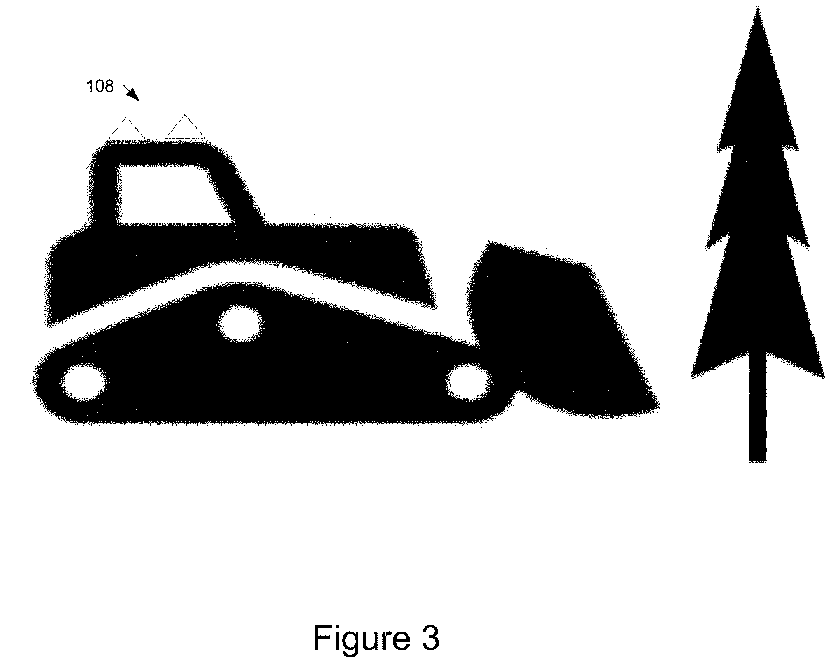

Figure 2 illustrates a pyramidal-shaped housing 106. A pyramidal structure provides a number of benefits, including stability, dissipation of the energy of tree/tree limb strikes, and field of view. It also facilitates deflecting debris. As described below in more detail, a pyramidal shaped housing can also be modified for forestry environments. In Figure 2, the entire external sensor array is disposed in a single pyramid shaped housing, although as illustrated in Figure 3, in some implementations, one or more individual sensors can be disposed in individual pyramid shaped housings 108 that are distributed on any suitable external surface, including the roof of a forestry vehicle but also potentially on other external surfaces, such as vehicle arms.

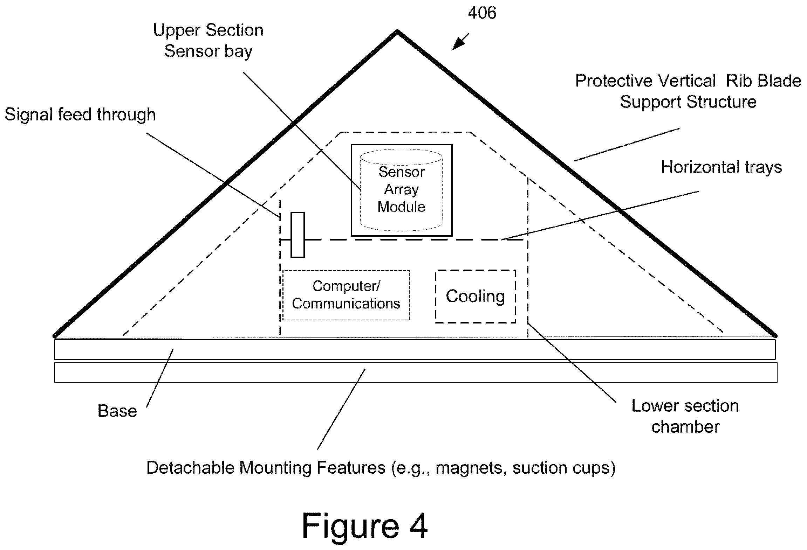

Figure 4 is a side view of a pyramid shaped housing 406 illustrating at a high level some features of a pyramidal housing. The pyramidal shaped housing may include edge ribs to strengthen the housing and spread the load from tree/tree limbs strikes. The edge ribs may be in the form of protruding vertical blade sections. That is, while the edge ribs strengthen the housing, they protrude from the surface so that a tree would be likely to first hit the protruding portion of the rib surfaces. To perform this protective function, the edge ribs preferably extend above the sensor bay in the upper section. However, the top of the pyramid also needs projection from tree limbs. To distribute the load, the ribs extend down to a base section. To further strengthen the structure, the ribs may extend down to the base over an extended region in a blade-like section. Horizontal members, such as those having a tray-like shape, may be provided to form separate upper and lower sections corresponding to a sensor bay in the upper section and a chamber in the lower section. The lower section may include, for example, a compute unit and communications electronics. Cooling may be included, such as a fan, radiating fins, a heat pipe, or solid-state cooling. A signal feed through may be included to support communication and power feedthroughs between the upper and lower sections.

In one implementation, the sensor array module is floating on internal horizontal support surfaces of the sensor bay such that it is substantially isolated from the shock of strikes to the exterior of the pyramidal housing. For example, a sensor bay may include a sensor floor section and a sensor roof section. The pyramid housing also includes side panels (not shown in Figure 4), at least around the base, to provide protection from tree debris and help deflect it.

In this example, a window region (now show in Figure 4) is provided for the sensor array for a camera or a LIDAR. This window region in one implementation is formed from a transparent material, although alternatively the window region could be left open if desired.

The pyramidal shaped housing does not have to be an ideal equal-sided pyramid shape. It may be implemented as a four-sided pyramid with equal sides but more generally it does not have to have equal sides. Additionally three-sided pyramids are possible. A pyramid shape is a stable structure that is mechanically strong. Additional mechanical strength can be provided by the rib sections and other features. These pyramid shapes can also be modified to optimize tradeoffs like sensor visibility, inner volume to house sensors, rib design to distribute loads, side panels, sensor bay roof/floor/sides design and other features to protect the sensor array module and any compute electronics housed by the pyramidal housing. As described below in more detail, the pyramidal shaped housing may be shaped as a squat pyramid. It may also be further designed in some implementations to optimize the sensor view.

As described below in more detail, in some implementations, a bulkhead is formed around the sensor bay. In one implementation, bladed bulkhead supports are disposed around a sensor bay.

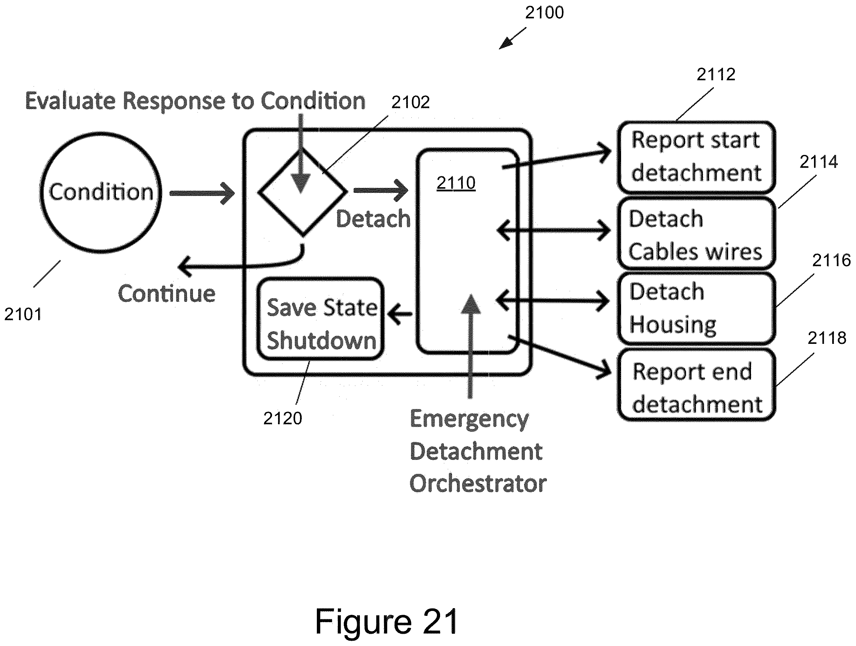

Figure 4 illustrates at least one safety detachable mounting feature is included, with, for example, a magnetic attachment mechanism being one option. If the forestry vehicle has a human operator, it's desirable in extreme circumstances, such as a vehicle rollover, for the pyramidal shaped housing to detach. In theory there may also be other extreme circumstances, such as falling rocks or extreme tree strikes, for which it may be desirable for the pyramidal shaped housing to detach. Additional details regarding a technique to orchestrate emergency detachment is described further below in more detail in regards to the example of Figure 21.

During normal use, in the course of ordinary tree strikes and ordinary tree limb impingement, it's desirable for the housing to stay affixed but have a detachable mounting structure that supports swapping out external sensor arrays.

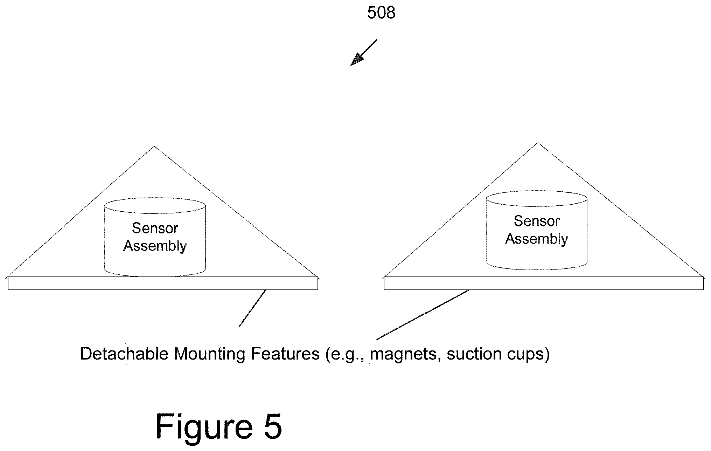

Figure 5 illustrates how smaller individual pyramidal shaped housings 508 for individual sensors may also have detachable mounting structures. As discussed below in more detail, small individual pyramid-shaped housing may be optimized for aspects such as a field of view.

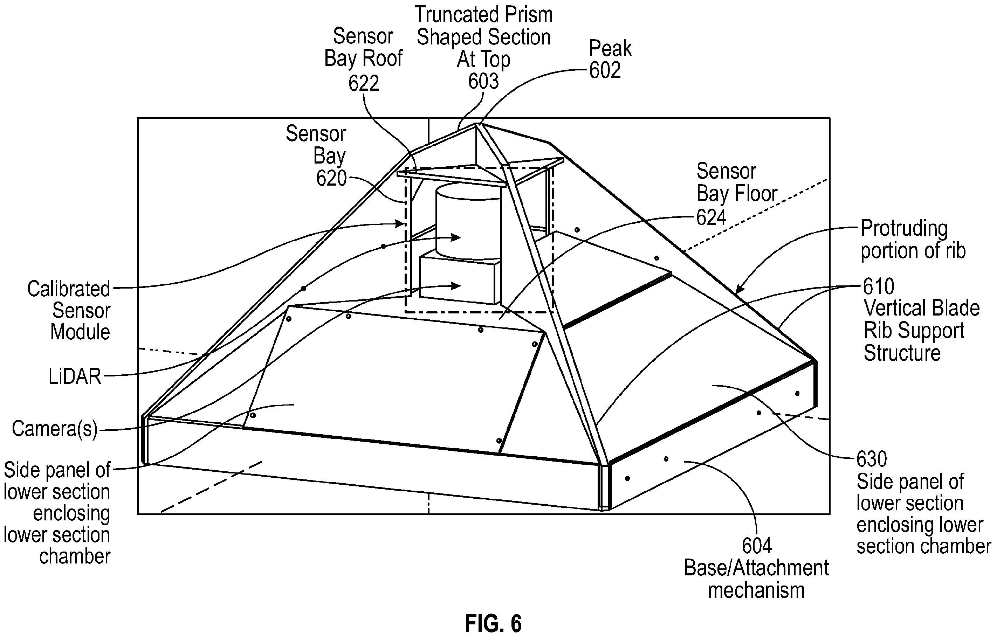

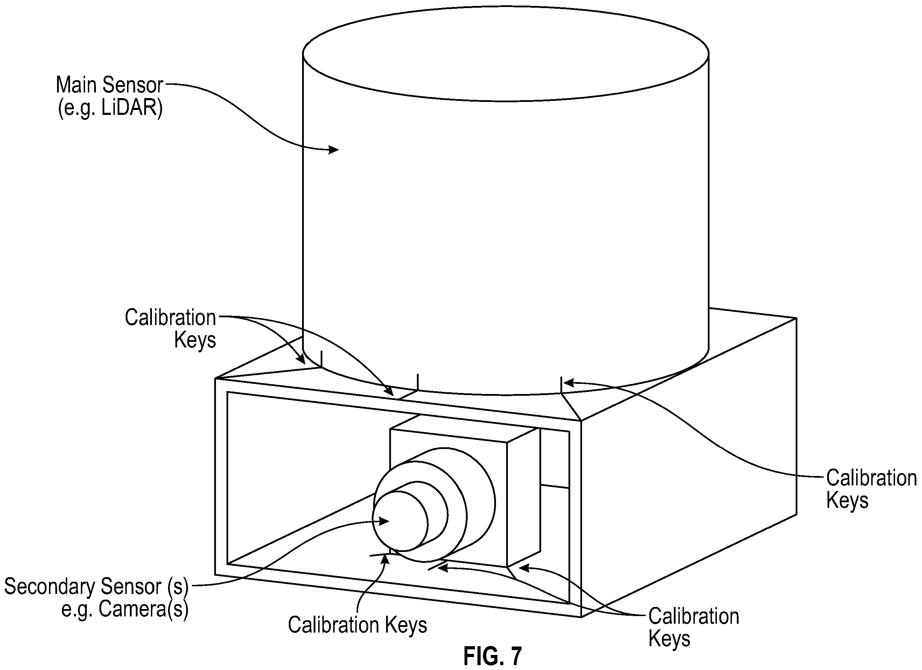

Figures 6, 8, 8A, 9, and 10 illustrates aspects of a squat pyramid housing 600 of a sensor array housing in accordance with an implementation. Figure 7 illustrates an example of a sensor array module housed in the squat pyramidal design 600.

Figure 6 is a profile view of a pyramidal shaped housing 600 in accordance with an implementation. There are ribs 610 in this example that extend from the peak of the structure 602 all the way to the base 604. The ribs protrude from the surface as a protective measure. This facilitates spreading the load and energy dissipation in the event of a tree strike from the top or the sides. There is a sensor bay 620 with a roof 622, floor 624, and sides 626 to provide additional protection to a sensor module. In this example, above the senor bay is a truncated prism section 603. The overall shape is a compromise of different considerations related to tree strikes and tree limb impingements. A flat top of the pyramid above the sensor bay 620 is a detriment but so is a sharp peak 602. A chamber section (not directly shown in Figure 6 but interior to side panels 530) is protected by side panels 630 during normal use. The sensor array housing thus has a base section, lower section (with the chamber),an upper section (for the sensor bay), an top section 603.

Large tree limbs falling from above will tend to hit the ribs first and tend to be deflected away from the rest of the sensor array housing. The shape of the lower section is also shaped to deflect tree debris. The arrangement of the ribs is selected to achieve high visibility for a sensor module which may, for example, include LIDAR and camera(s). A base section in one implementation includes an attachment mechanism.

Figure 7 illustrates an example of a calibrated sensor module for use in the sensor bay. Mounting features (not shown) may be included to fix the sensor module in place in the sensor bay. In one implementation, a calibrated sensor module may be swapped between housings. In some implementations, there are different types of sensor modules for different types of work and duties. Calibrating two or more sensors as a unit permits a calibrated sensor module to be swapped out in the field with other modules and structures. In one implementation, a calibrated sensor module may be swapped between housings, and a module may have different calibrated modules for different work and duties.

In one implementation, the sensor module contains two or more sensors, such that when the unit is assembled, the housing contains two or more sensors, cameras, etc. that are calibrated as a unit, such that each is calibrated with the module and each other allowing swapping between modules and structures in the field.

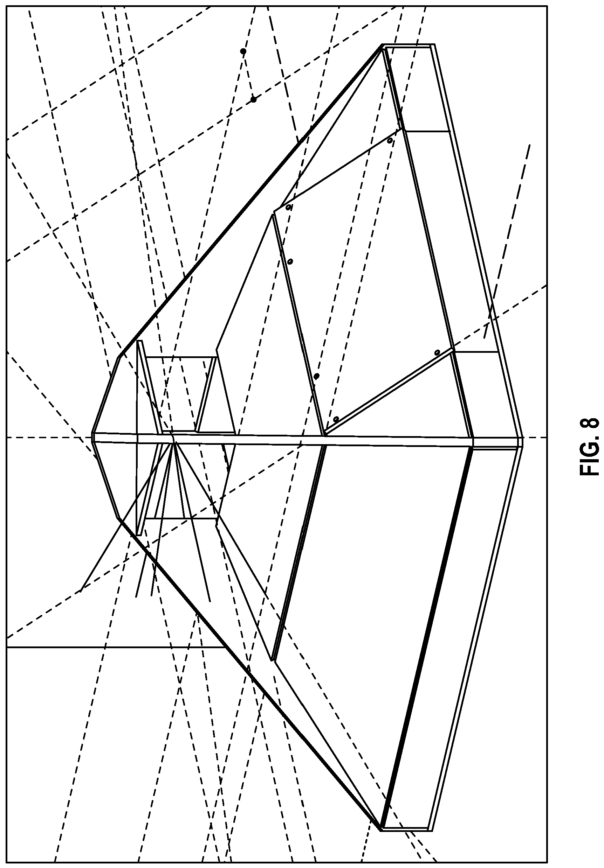

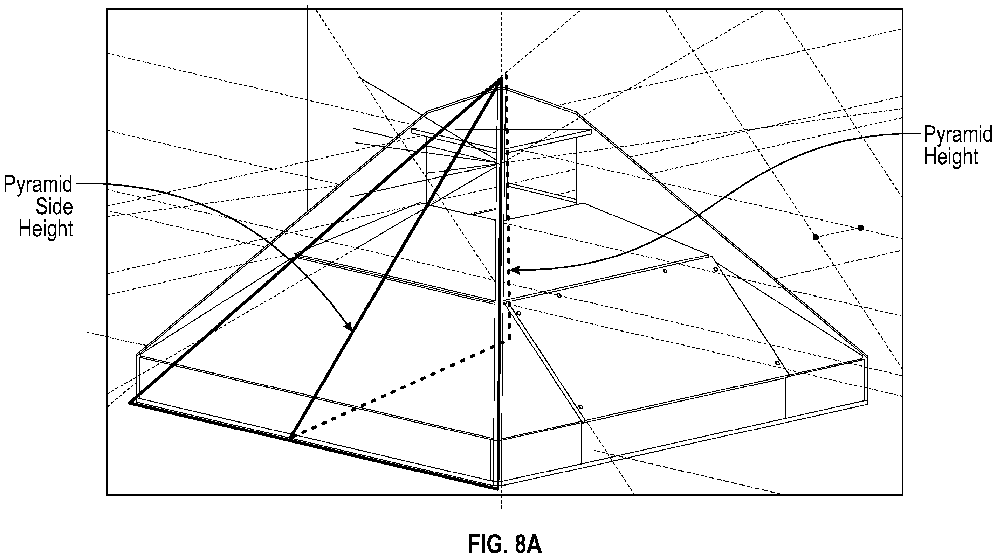

Figure 8 illustrates the squat pyramidal housing that is assembled, but without the sensor module. Figure 8A illustrates the pyramid side height and pyramid height of Figure 8.

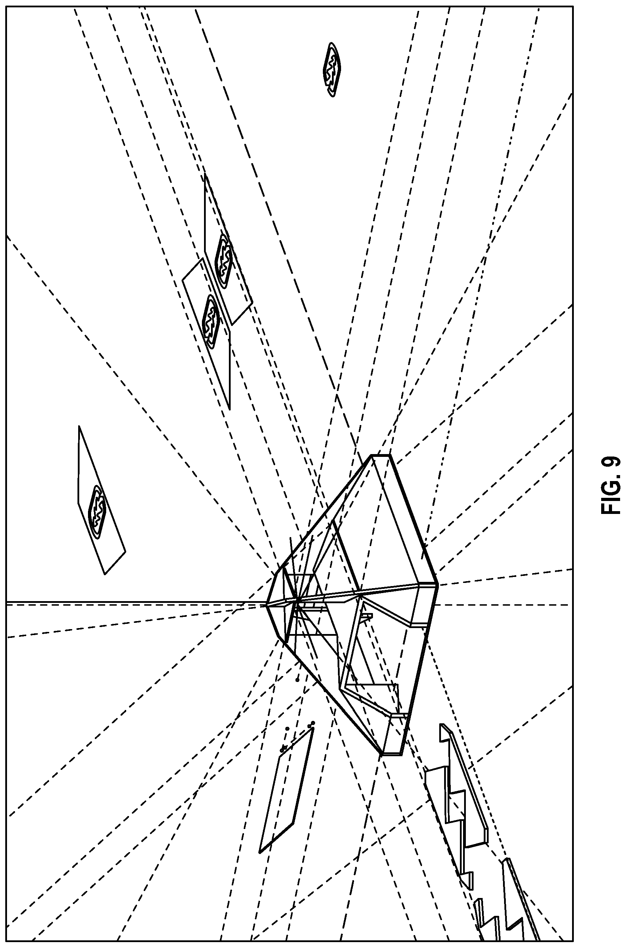

Figure 9 illustrates a break away view with some of the panels of the pyramidal housing removed to provide a view into the housing. The break-away diagram of this monolithic pyramid illustrates the main components of these systems, with the sensors requiring a line of site view, such as LIDAR and cameras, located near the peak in a bay or pod prominent on an upper portion of the housing. A lower part of the housing has a protected chamber (exposed in Figure 9) for any on board compute unit and may include sensors that have no need for line of sight (such as an IMU). The chamber in the lower part of the housing may include connections, communications, data, or power management components requiring both proximity to the sensing array and physical protection from the operating environment.

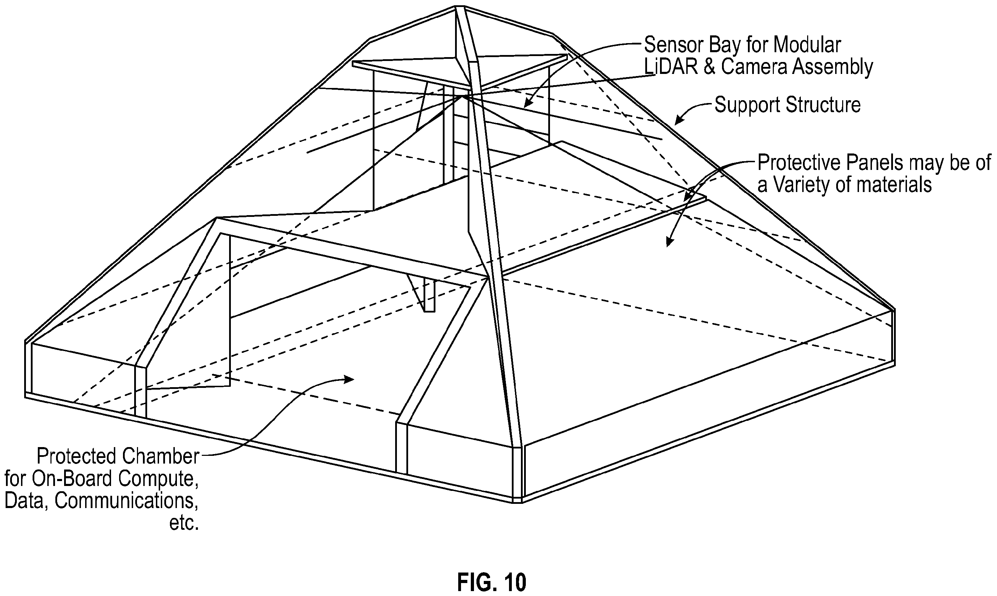

Figure 10 illustrates a view into the sensor bay for a modular sensor array. The sensor bay is sized to house a particular sensor module and to provide a desired visibility. Mounting features or mounting surface may be provided to mount a sensor module in the sensor bay. Figure 10 also illustrates a view into a protected lower chamber. In one implementation of a monolithic pyramid design, a compartment at the bottom is accessed from the rear and holds the electronics, computer, and control systems. In one implementation, there is a sealed cable pass-through to the sensor level, where the replaceable module for LiDAR, Cameras, and or other sensors are stored. These modules are calibrated individually and together as an integrated unit. This unit can operate in stand-alone mode, communicating with wireless, cellular, or wired connections, or coordinate and integrate with other sensor units in the same project worksite.

### Example Design Optimizations

Many variations of a basic design are possible. In a forestry environment, some desirable features of a sensor array housing with a pyramidal design include features such as:
- Squat pyramidal forms
- Decoupled pyramids optimized for sensor view
- Cantilevered pyramids
- Tapered rib blades
- Bladed bulkhead supports around a sensor pod
- Profiled bulkheads to minimize angular occlusion (i.e., achieve a high field of view)
- In-built thermal management for both passive and forced cooling
- Vehicle-external mounting
- Vehicle agnostic sensor arrays
- Switchable attachment mechanism (e.g., powered magnets)
- Sacrificial Component Consistent with ROPS
- Easy installation
- OEM agnostic compatibility

In one implementation, the deployed pyramids are fabricated from plate materials, aluminum, steel, wood, plastics, composite materials, etc. If aluminum is used, then as a non-limiting example, example aluminum frame may be made with 3/8" ribs with 3/16" and 1/4" panels and trays for components within the structure. Other materials, thicknesses, or mixtures of materials and thicknesses are selected to tune the survivability of the component with the prominence of its deployment and operating environment. For example, pyramids on non-cutting machines may leverage thinner materials to provide a less obstructed field of view in situations where direct working impacts are less likely than the active cutting machines working in unstable fire-salved or dead-snag forests. However, note that tuning for survivability on non-cutting machines must still resist projectiles thrown up by the wheels, tracks, an action of forestry machines. More generally a wide number of variations of material parameters may be selected based on a variety of survivability considerations.

Returning to the examples of Figure 6, Figure 8, Figure 8A, Figure 9, and Figure 10, as previously discussed, in some examples, the housing is shaped as a squat square pyramid to optimize several performance metrics. Figure 8A illustrates some aspects of the geometry. Some optimizations regarding the pitch and internal volume of a squat pyramid design will now be discussed. In one implementation, the edge ribs of the structure must be at least 1/ √2 * the side and when the edge rib length exceeds the length of a side the pyramid begins to tip rather than spread the load when struck - functionally the rib length sits between 0.7-1.0 * pyramid side, biased towards the high end of that range to provide field of view prominence and interior volume for the componentry. In one implementation, the interior volume for a monolithic structure should be about 1.5 ft³ and the stand-alone sensor pods will be about ¼ the size of that, about 0.375ft³. There would be understood to be examples of optimizations.

As a practical matter, there are tradeoffs in the shape of the pyramidal shaped housing regarding the dimension of the sides. A pyramid shape that is too peaked in shape is less stable and more likely to be a candidate for being struck. Too flat is also undesirable. The minimum height of the pyramid side is 0.5 - but that would lay flat on a square base, the 0.7 (1/sqrt2) lower limit is the smallest the inventors believe is practical, but 0.5 < x < 0.7 is still a pyramid though is suboptimal. Anything above the side length for the in-plane height of the triangle side creates a peaky pyramid and gets tippy, becoming an unduly large strike target.

Consider an example in which the pitch of the ribs happens to be 41 degrees to preserve a minimum width for structural stability of those components (fitting around the platform inserts) and conserve height to better deflect impacts. In this example, the operational range should be from 30 to 50 degrees for symmetric enclosures. If the enclosure is oriented towards the expected direction of impact the portion facing the environment will remain in that 30-50-degree slope while the sides away from the environment are free from constraint.

In one implementation, the entire rib structure could be a smooth arc instead of a straight-line edge to further deflect impacts away from the sensor pod.

In some implementations, the rib structure may be more densely spaced below or above the sensor module layer. This is because only the sensor modules require a clear field of view to function. Thus, for example, a more complex rib structure could be employed than show in Figure 6.

Referring again to Figure 6, the top of the pyramid can be further optimized to reduce prominence of the structure once the enclosed volume falls under the 100mm diameter sensor module. This can be seen in the diagrams as the truncated prism form of the pyramid, above the calibrated sensor module, in which the slope of the pyramid can be flattened to lower prominence as its enclosed area is irrelevant. The top of the pyramid should not be flat, else it loses the ability to deflect objects. As an alternative, the roof area could be a full cone, which would reduce the opportunity for obstacles to get stuck into the pyramid structure.

The example illustrated in Figure 6 catches incident branches and holds them away from the sensor module until they've lost momentum and can benignly fall away. A lower lip can be included, even in the conical form, to arrest deflections and keep them from being shunted into the sensing components.

The example of Figure 6 is a monolithic pyramid that is a squat, square pyramid. However, in alternate implementations, the symmetry need not be preserved. That is, there can be anisotropic optimizations.

In one implementation the top (sensor bay housing) of the pyramid contains a sensor array at least 100mm in diameter and 90mm height plus the calibration block for co-located sensors within the sensor module. This defines the point of maximum usable height in the structure, above this point the height of the structure serves no constructive purpose with the increased height increasing the likelihood of getting caught on trees and branches as the vehicle moves through the forest. If the top were flat, however, this surface would be susceptible to a direct strike from above. The bottom of this section can be adjusted to permit larger or more numerous sensors into the housing, or more computing power into the main chamber below the sensor module. The dimensions of the sensor array and calibration in this example are merely examples, and it will be understood that other dimensions for the sensor array and calibration block are possible.

An attachment mechanism may include existing hard-points, switchable magnets, or other combinations including a mounting plate attached to the top of the cab providing a suitable platform without interfering with any safety equipment or escape hatches on the roof of these machines. Other types of suitable attachment that don't interfere with safety equipment and escape hatches include ratchet straps, suction cups, guy-lines, bolted assemblies (break-away bolts), etc. are supported with this pyramidal shaped housing system.

In some implementations, the sensor bay is exposed. Alternatively, it may be protected by a transparent panel during normal use.

The design is consistent with the sensor array being free-floating in that strikes by tree debris or tree limbs have their load dissipated into the ribs, side panels, and base of the housing. Falling trees will also tend to slide off the sensor array housing, guided by the protruding portions of the ribs. Also, tree debris will tend to be deflected around the side panels and tend not to impact the sensor array.

As discussed later in more detail, decoupled and cantilevered forms of the pyramidal housing explicitly explore a wider front-facing field of view. In other words, the pyramidal shape may be optimized in a variety of ways.

More generally it will be understood that many optimizations and variations are contemplated to address these tradeoffs.

### Decoupled Pyramid

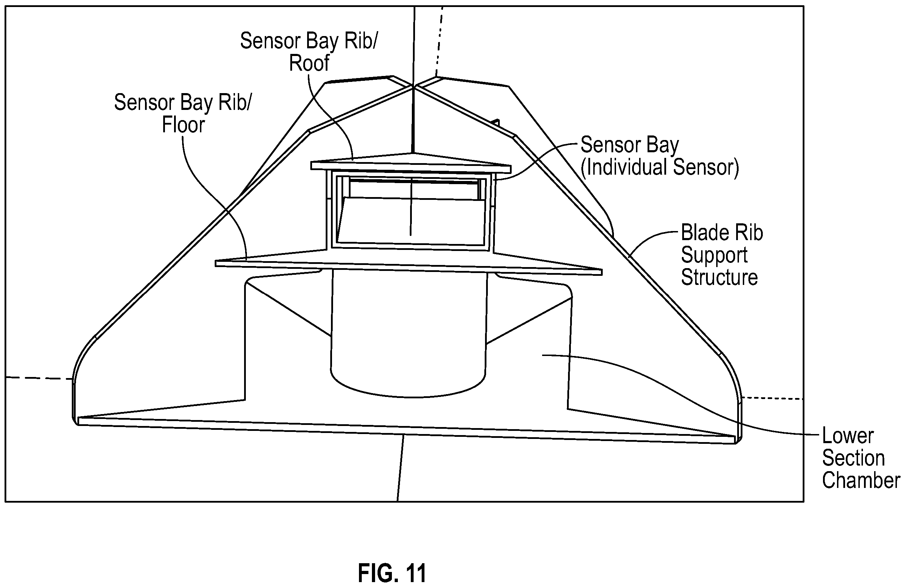

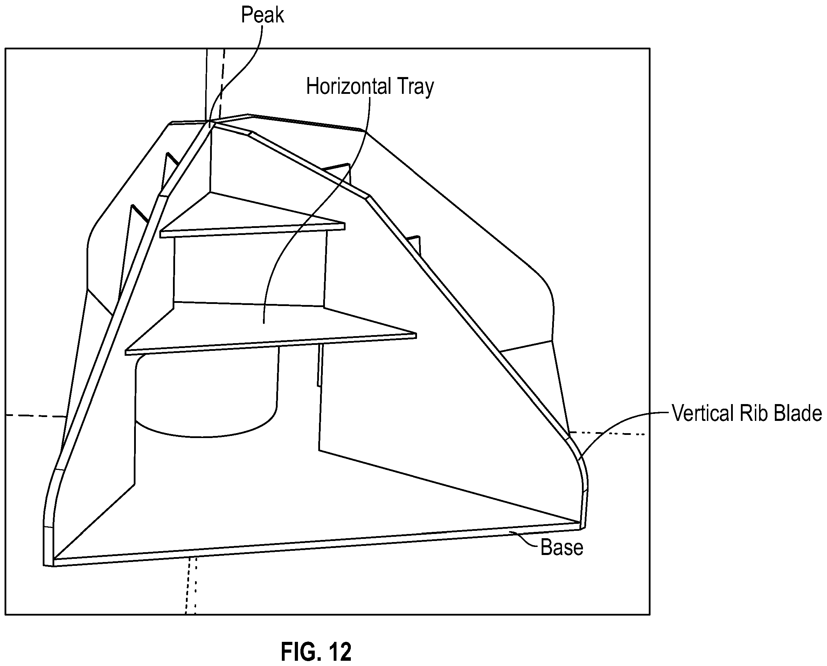

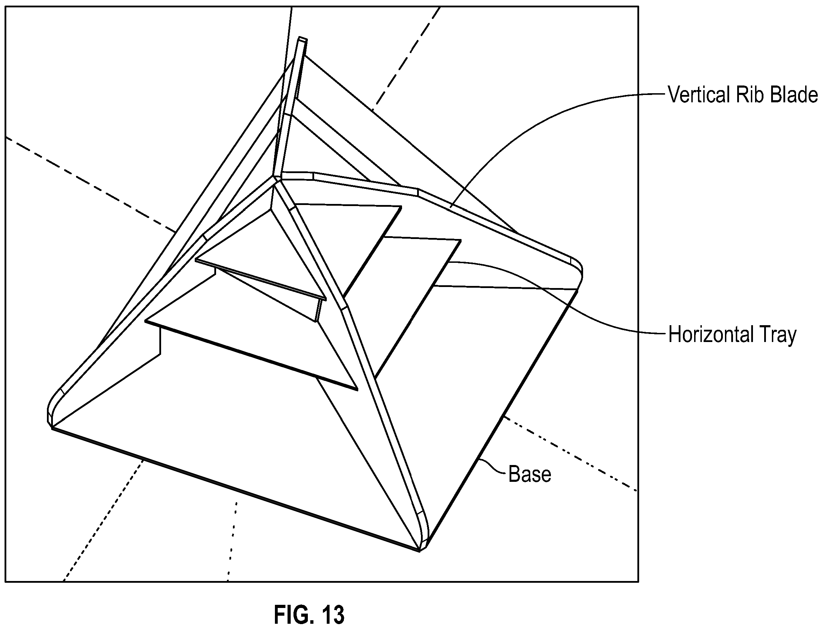

Referring to Figures 11, 12, 13, and 14, in one implementation, decoupled pyramids represent smaller sensor pods that may be spread out across and around a forestry vehicle to improve sensor field of view or provide perspectives, redundancies, or coverage for essential views from the vehicle, the environment around the vehicle, or the work being or to be performed. These decoupled pyramids manage the external vehicle sensors while the central computing unit remains safely in the lower risk main pyramid or has been located inside the cab or engine compartment to improve survivability, power access, or thermal management. These decoupled pyramids have ribs and side panels. They distribute the load and provide protection from tree strikes and tree debris but as they are small units they are a somewhat higher risk of being crushed from a tree strike. They may house an individual sensor in an upper section forming a sensor bay and house a compute unit and communications electronics in a lower section.

These decoupled pyramids may be mounted on the roof, at the corners of the vehicle, on the boom arm, near or on the cutting arm, or to the bottom of the rotating cab itself. Hardened connector wires or wireless communications may be used to pass signals from these remote sensors to the central on-vehicle compute unit. Power to the decoupled pyramids may be sourced locally to the installation point or run centrally in a Power over Ethernet-style configuration passing power to the remote sensing unit and data back to the central computing unit.

Decoupled pyramids represent smaller sensor pods that may be spread out across and around a forestry vehicle to improve sensor field of view or provide perspectives, redundancies, or coverage for essential views from the vehicle, the environment around the vehicle, or the work being or to be performed. These decoupled pyramids manage the external vehicle sensors while the central computing unit remains safely in the lower risk main pyramid or has been located inside the cab or engine compartment to improve survivability, power access, or thermal management.

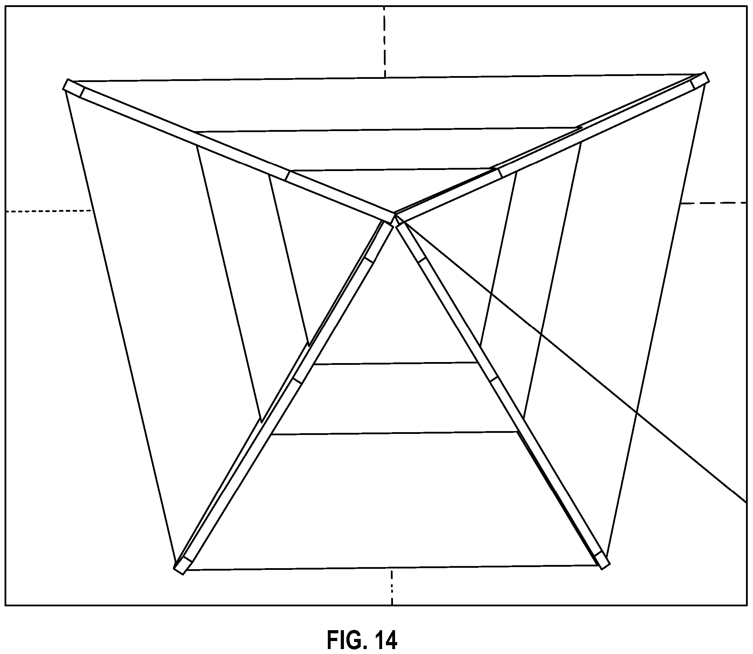

Of note in Figures 11 to 14, the decoupled pyramids in this example are designed to have a wider field of view facing forward, at 120 degrees rather than the square pyramid's 90 degrees. This can be seen in the front view of Figure 11, and the top view of Figure 14. This accommodates a forward-facing bias in a 360 LiDAR scan providing a clear work area that matches with a wide-angle camera calibrated with the LiDAR in this modular display.

While a three-sided pyramid is a technical possibility, it is somewhat more difficult to design a three-sided pyramid to satisfy other design goals. For example, having three edge ribs instead of four makes it harder to spread loads from tree strikes. Pyramids with differing numbers of sides, such as 3 sides, 4 sides, or even 5-8 or more, are possible to construct. As the number of sides increases symmetrically the advantage over a circular cone shape diminishes. For fewer sides only 3 sides create a 3D shape, but a tetrahedron is a poor deflector for the enclosed volume of the shape. Satisfying the design goals becomes challenging with fewer sides, while also reducing the survivability of the housing from loads and strikes.

These decoupled pyramids may be mounted on the roof, at the corners of the vehicle, on the boom arm, near or on the cutting arm, or to the bottom of the rotating cab itself. Hardened connector wires or wireless communications may be used to pass signals from these remote sensors to the central on-vehicle compute unit. Power to the decoupled pyramids may be sourced locally to the installation point or run centrally in a Power of Ethernet-style configuration passing power to the remote sensing unit and data back to the central computing unit.

As illustrated in Figures 11 to 14, these decoupled pyramids also have ribs, which may be implemented as bladed structures, horizontal trays, a sensor bay having a roof and floor section, and lower section compartment.

### Cantilevered Layout

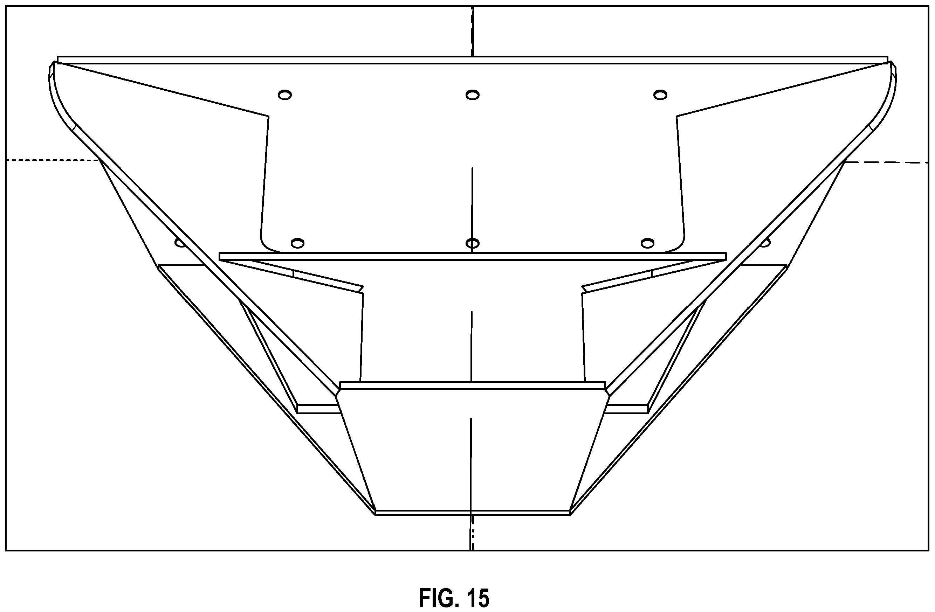

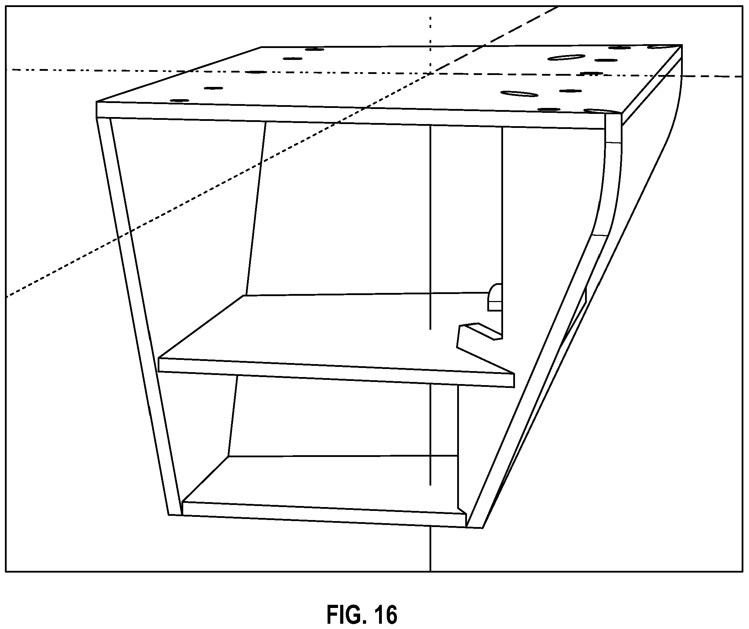

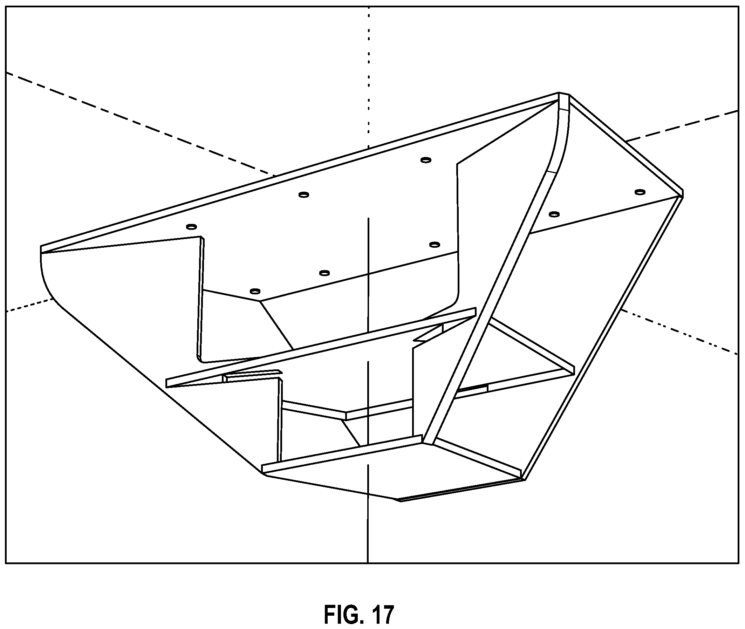

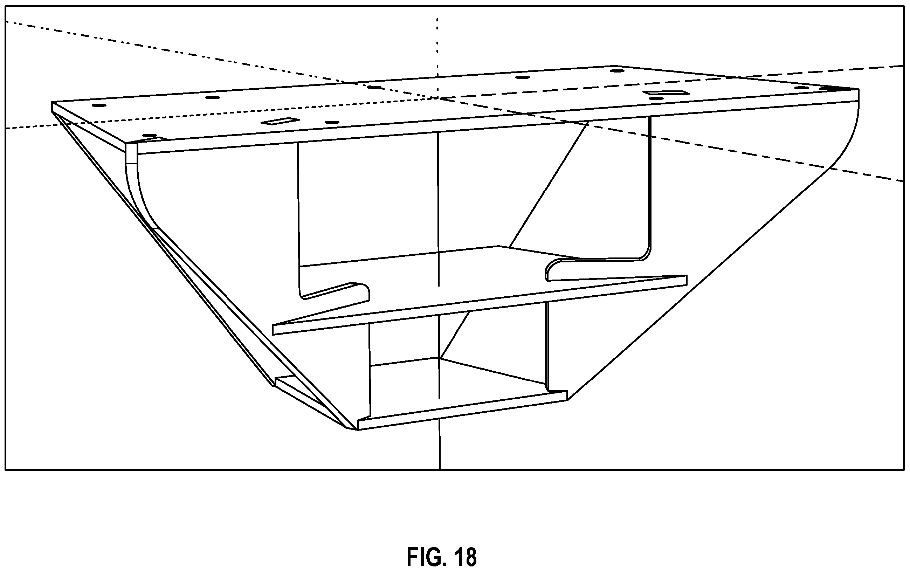

Figures 15, 16, 17, and 18 illustrate different views of a cantilevered configuration for the pyramid. It can be seen in the figure how rib structures have features to fit into horizontal platforms dividing the housing into an upper sensing section and a lower section for other components, such as a compute unit. The cantilevered design is a form of pyramid that can be implemented to support a wide field of view for a sensor or a sensor module. A cantilevered form of a pyramid is a design option. The completed assembly would be understood to include side panels and may include other features. These cantilevered designs extend the reach of the cab mounted pyramid to support a greater field of view, an unobstructed view down the side of the machine, a free positioning around crowded rooftop areas (such as when the ROPS escape hatch and bracing dominates the available cab surface), and larger sensing units. The cantilevered designs are less robust against direct strikes and may be better suited for non-cutting machines where detailed sensing is required, such as processors, loaders, and yarders that operate at a project landing and often interact with trees and logs at different stages of processing as well as the interface with vehicles within and without the project area (such as logging trucks).

### Tapered Buttresses

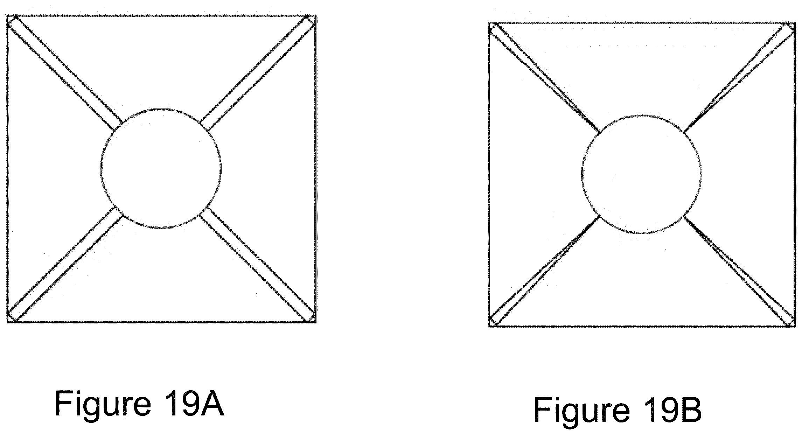

Referring to Figures 19A and 19B, in one implementation the vertical rib blades are tapered from the central (sensor) axis such that the angular occlusion of the structure is minimized for any given sturdiness of the supports. This creates a tapered buttress where a support, thick at the outer edge of the structure, tapers to a point as it nears the center of the sensor array. These tuned structures are an optimization to maximize sensor performance without sacrificing durability.

Figure 19A illustrates pyramidal cross-section about the sensor bay with rectangular vertical support blades on Figure 19A and that same cross section diagrammed with tapered support blades on Figure 19B.

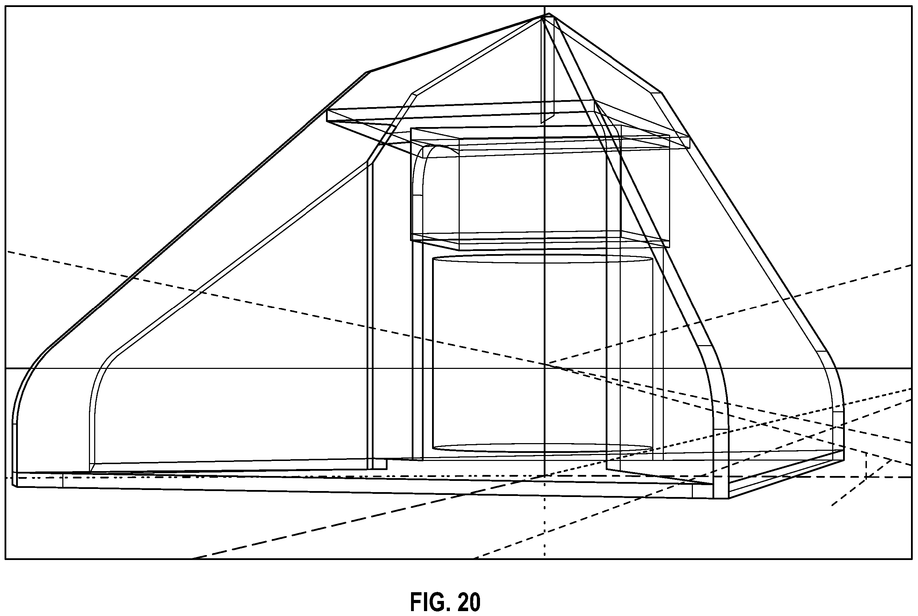

Referring to Figure 20, an alternative is to cut away the interior of the bladed support near the sensor(s) to similarly reduce the angular obstruction of the cage itself at the sacrifice of structural rigidity of the whole housing.

### Operator Safety, Safety Standards and ROPS Considerations

There are government rollover protection structure (ROPS) standards mandated in the United States by occupational safety and health standard of OSHA 1926 and by the standards of the International Standardization Organization (ISO). These ROPS regulations include a strength requirement as well as an energy absorption requirement.

There are rollover detection systems for vehicles that use sensors to detect impending rollovers and to trigger safety measures to protect the operator. These systems can include Active Rollover Protection (ARP). In ARP, sensors detect displacement, tilt angle, acceleration, and the time to activate safety measures. The system can also generate an emergency notification.

ROPS testing can include a structural safety test. This may include a hydraulic pushing cylinder to crush a vehicle's cabin in different directions. A ROPS test validates the strength of a cabin structure and the driver protection.

The types of human-operated forestry vehicles used in forestry management comply with ROPS regulations and typically include roll bars and comply with roof strength regulations. Cab roof escape hatches are commonly included to provide an emergency exit in the event of a rollover. These ROPS systems typically include a cage, rollover bars, and emergency exit meant to provide the operator the opportunity to escape.

While the form and structure of the external sensor array assembly is intended to protect the sensing hardware from the hazardous environment during ordinary use, it is preferably designed to exist as part of a larger safety system ensuring the protection of the human operator in the cab (if any).

In one implementation, the entire sensor array housing system is designed to be sacrificial, separating from the vehicle cab in the case of severe damage and breaking clear from the cab, operator, and any cab exits or protective equipment. For example, in the event of a rollover event, the sensor array system should detach in a manner so it doesn't focus energy and forces in a manner that degrades the ROPS. This detachment may occur passively as a result of the types of forces and energy that occur during a rollover. However, in one implementation it is initiated actively in response to a ROPS warning. For example, in one implementation, an on-board compute unit generates or receives a release trigger and coordinates the separation. In one implementation, the system also automatically reports the event to support and assist in a safety incident response. For example, the report may include a time, location, or other information to aid in a safety incident response.

Figure 21 illustrates an example of an emergency sensor housing detachment subsystem 2100 in accordance with an implementation. In one implementation, a detach decision is triggered by loading on the housing and orchestrated in the compute unit within the system. In one implementation, powered magnets can be depowered to release the sensor array housing to slide away from the forestry machine. Exploding bolts can also be used to detach on demand as another option to detach the housing. During the detachment operation, cables and connectors are also severed so as to avoid the housing from becoming a tethered flail and swinging back into the cab, operator, or safety equipment on the vehicle.

In Figure 21, a condition 2101 is detected. For example, in one implementation, one or more loading sensors are monitored for an unsafe loading condition that is evaluated in the evaluation block to be indicative of a need to detach the sensor array housing for safety reasons. However, more generally other types of sensors could be monitored for a need to detach the sensor array housing for safety reasons. The condition 2101 is evaluated in the evaluation block 2102, such as the load being at or above a threshold load. In this example, if the valuation is true, a trigger to detach the sensor array housing is sent to the emergency detachment orchestrator 2110. If the evaluation is not true, an evaluation loop is continued. The emergency detachment orchestrator 2110 in one implementation coordinates activities such as reporting the start of detachment 2112, detaching cables and wires 2114, detaching the sensor array housing 2116, reporting the end of detachment 218, and saving state shutdown 2120.

In one implementation, the attachment system has a strength selected to keep the sensor array shell in place during normal use but detach during a rollover event. The attachment system may use existing hard-points, switchable magnets, or other combinations including a mounting plate attached to the top of the cab providing a suitable platform without interfering with any ROPS safety equipment or escape hatches. Some other options include ratchet straps, suction cups, guy-lines, bolted assemblies (break-away bolts), etc.

Consider an example of structural integrity issues. The external housing operates in a hostile environment with a heavy vehicle (e.g., 90,000 lb. vehicle) it is riding on pushing it into and through similarly sized trees and their branches. The housing must maintain shape and function during normal use despite collisions and impacts. Forward translation is one kind of impact, but the cab of these vehicles is both freely rotating and self levelling, so the collision with branches and trees may be oblique or from the side as well as from above or head on. The housing must be robust against impact from all directions during normal use.

However, the external housing operates near or above an operator's space and ought not protrude or intrude upon that space even in extreme conditions. When overwhelming force is brought to bear on the sensor housing the housing should deform, break, and fall free of the operator's space.

This requires designing the sensor array housing to be consistent with the ROPS parameters of a particular type of forestry vehicle. For example, the sensor array housing may be designed to demonstrate energy absorption and detach for impacts above that of an ordinary tree strike but below the failure threshold of the host vehicle's operator space and space roll over protection systems.

In one implementation, the housing structure is strong by design with the attachment points a designed failure point to ensure the structure breaks free of the operator space at failure. These thresholds will vary by vehicle and protection system, but in one implementation are often achieved through the use of switchable magnets. In one implementation, the switchable magnets have a trigger system to switch off in the event of a rollover. In one implementation, tethered solutions are avoided, as this tends to create a flail on detachment from the vehicle under severe impact, that rebounds into the operator space the detachment was meant to protect.

As a practical matter, mechanical engineering design analysis may be used to identify a safe conservative design space in which the external housing will, for a particular cab designing detach and/or absorb energy well below the types of forces and energies in a rollover event.

It will also be understood that some of the same design considerations may be considered for designing the sensor array to deal with extreme events such as extreme tree strikes, rock falls, etc. that while not rollovers are extreme events. While the external array housing should be designed to withstand ordinary tree strikes, there may be exception events that are less extreme than rollovers but for which deformation and/or detachment of the external sensor array housing may be desirable for various reasons, such as to prevent the focusing of forces and energy on a section of the roof of a manned or unmanned forestry vehicle.

Remotely controlled forestry vehicles are a technical possibility. There are no concerns for ROPS requirements for purely remotely controlled operation of a vehicle used solely for remote operation. However, damage to the roof of remotely controlled forestry vehicle is a consideration in a rollover or an extreme tree strike. Consequently, the sensor array housing used on a remotely controlled vehicle may be designed to detach and/or absorb energy in response to an extreme tree strike or a rollover.

### Sealed Components

The compute unit and sensor arrays provide protection against water, dust, and other intrusions that may interfere with electrical or other performance of the units.

### In-Service Calibration

The cameras and LiDAR, IMU, GPS or GNSS, and other sensors, are in isolated mounting frames that can be calibrated before deployment and are not directly impacted by loads on the protective pyramid. This means the free-floating sensors can avoid mis-alignment in service and see longer mean times before human interventions, corresponding to greater reliability of the system than rigid systems.

The buttresses and support structures may also be used as a calibration tool when fields of view overlap to support auto-calibration in service, allowing for recovery from those impacts that do impair sensor function.

### Thermal Management

It will be understood that additional forms of protection could be included to optimize the protection of the compute unit and communication electronics housed in the external sensor array housing. For example, additional cases could be used to house the computing unit and communication electronics within the chamber of the external sensor array housing. In one implementation sensor array(s) as well as the compute unit are optimized to manage the thermal load generated by the sensors and computing capacity within the unit. This thermal management includes static and/or forced cooling, such as radiative fins, fans, liquid cooling, heat pipes, conduits, thermal exchangers, and other thermal management approaches. These thermal management approaches can be used in tandem or isolation, on the computer or sensors together or separately. The thermal fans, ducts, etc. can be integrated into the pyramidal shaped housing, sit between the sealed interior and protective shell, or sit directly on the sensor or computer or its container.

In combination and separately these components balance the heat generated internally as well as the excess heat transferred from the exposed operating environment.

As these components may be joined together or divided about the vehicle it is possible to locate the compute unit on the interior of the cab, providing increased protection and support for thermal mitigation while coordinating the various signals and perspectives from the different sensor pods.

A test mule consisting of a sealed pelican case with sealed connectors was used to test the principle of the sealed computing module. This same environmental sealing demands appropriate thermal management solutions. The sensor array(s) as well as the compute unit are optimized to manage the thermal load generated by the sensors and computing capacity within the unit. This thermal management consists of both static and/or forced cooling, such as radiative fins, fans, liquid cooling, heat pipes, conduits, thermal exchangers, and other thermal management approaches. These thermal management approaches can be used in tandem or isolation, on the computer or sensors together or separately. The thermal fans, ducts, etc. can be integrated into the pyramid, sit between the sealed interior and protective shell, or sit directly on the sensor or computer or its container. An example square pyramid dissipated 150W of waste heat from an enclosed volume of 1.5ft³ - yielding a relationship of 100W cooling capacity for every enclosed cubic foot of volume. It should be noted that this this relationship between cooling power to enclosed volume is merely an example. The relationship will likely change in the future with innovations in electronics, packaging, and thermal management. For example, future generations of components may be smaller. Also, the amount of waste heat generated may also change in the future with innovations in electronics.

In combination and separately these components balance the heat generated internally as well as the excess heat transferred from the exposed operating environment.

As these components may be joined together or divided about the vehicle it is possible to locate the compute unit on the interior of the cab, providing increased protection and support for thermal mitigation while coordinating the various signals and perspectives from the different sensor pods.

### In-Service Maintenance

In one implementation, various combinations of air or water bursts, wipers, tear-aways, air-shields, or other mechanisms for maintaining unobstructed lens and sensor visibility in service are built into and supported by the pyramid enclosures. The buttressed supports themselves provide an external perimeter for these systems to defend visibility at, ahead of the potentially impacted sensors. Examples of physical deflection and protection can be seen below in the deployment images. The upper pyramid can be covered with Lexan or another transparent material, where the transparent material may optionally include a lens. Alternately, the upper pyramid may operate uncovered to minimize cleaning requirements.

### Power and Communication

A deployed unit, including the sensor array, may be implemented to provide power in a variety of ways. In one implementation, deployed units are powered via battery and wired connections to the vehicle power of a forestry vehicle at the main or accessory circuit.

The deployed unit may include a variety of options to communicate with in-cab electronics of a forestry vehicle, communicate with other forestry vehicles, and/or communicate with a management portal.

Examples of communications options include via Wi-Fi, wired, and cellular connections. Communications with an on-site remote communications array support vehicle to vehicle coordination, data egress from the project site to the management portal, and connections to the control system for the operator and machine, such as in-cab tablets and control surfaces, CanBUS, or on-board machine telemetry systems, auxiliary sensors integrated more invasively with the machine and tailored specifically for individual manufacturers or models.

### Interchangeability

In one implementation, the housing themselves, from the monolithic pyramid, auxiliary decoupled pyramids, or cantilevered designs, are interchangeable and easily swapped or replaced if damaged or lost in service.

In one implementation, the sensor modules themselves, from the monolithic pyramid, auxiliary decoupled pyramids, or cantilevered designs, are interchangeable and easily swapped or replaced if damaged or lost in service.

### Alternate Implementations

In the above description, for purposes of explanation, numerous specific details were set forth. It will be apparent, however, that the disclosed technologies can be practiced without any given subset of these specific details. In other instances, structures and devices are shown in block diagram form. For example, the disclosed technologies are described in some implementations above with reference to user interfaces and particular hardware.

Reference in the specification to "one embodiment", "some embodiments" or "an embodiment" means that a particular feature, structure, or characteristic described in connection with the embodiment is included in at least some embodiments of the disclosed technologies. The appearances of the phrase "in some embodiments" in various places in the specification are not necessarily all referring to the same embodiment.

Some portions of the detailed descriptions above were presented in terms of processes and symbolic representations of operations on data bits within a computer memory. A process can generally be considered a self-consistent sequence of steps leading to a result. The steps may involve physical manipulations of physical quantities. These quantities take the form of electrical or magnetic signals capable of being stored, transferred, combined, compared, and otherwise manipulated. These signals may be referred to as being in the form of bits, values, elements, symbols, characters, terms, numbers, or the like.

These and similar terms can be associated with the appropriate physical quantities and can be considered labels applied to these quantities. Unless specifically stated otherwise as apparent from the prior discussion, it is appreciated that throughout the description, discussions utilizing terms, for example, "processing" or "computing" or "calculating" or "determining" or "displaying" or the like, may refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

The disclosed technologies may also relate to an apparatus for performing the operations herein. This apparatus may be specially constructed for the required purposes, or it may include a general-purpose computer selectively activated or reconfigured by a computer program stored in the computer.

The disclosed technologies can take the form of an entirely hardware implementation. However, some aspects, such as emergency detachment orchestration, may include software elements.

Furthermore, the disclosed technologies can take the form of a computer program product accessible from a non-transitory computer-usable or computer-readable medium providing program code for use by or in connection with a computer or any instruction execution system. For the purposes of this description, a computer-usable or computer-readable medium can be any apparatus that can contain, store, communicate, propagate, or transport the program for use by or in connection with the instruction execution system, apparatus, or device.

A computing system or data processing system suitable for storing and/or executing program code will include at least one processor (e.g., a hardware processor) coupled directly or indirectly to memory elements through a system bus. The memory elements can include local memory employed during actual execution of the program code, bulk storage, and cache memories which provide temporary storage of at least some program code in order to reduce the number of times code must be retrieved from bulk storage during execution.

Input/output or I/O devices (including, but not limited to, keyboards, displays, pointing devices, etc.) can be coupled to the system either directly or through intervening I/O controllers.

Network adapters may also be coupled to the system to enable the data processing system to become coupled to other data processing systems or remote printers or storage devices through intervening private or public networks. Modems, cable modems and Ethernet cards are just a few of the currently available types of network adapters.

Finally, the processes and displays presented herein may not be inherently related to any particular computer or other apparatus. Various general-purpose systems may be used with programs in accordance with the teachings herein, or it may prove convenient to construct a more specialized apparatus to perform the required method steps. The required structure for a variety of these systems will appear from the description below. In addition, the disclosed technologies were not described with reference to any particular programming language. It will be appreciated that a variety of programming languages may be used to implement the teachings of the technologies as described herein.

The foregoing description of the implementations of the present techniques and technologies has been presented for the purposes of illustration and description. It is not intended to be exhaustive or to limit the present techniques and technologies to the precise form disclosed. Many modifications and variations are possible in light of the above teaching. It is intended that the scope of the present techniques and technologies be limited not by this detailed description. The present techniques and technologies may be implemented in other specific forms without departing from the spirit or essential characteristics thereof. Likewise, the particular naming and division of the modules, routines, features, attributes, methodologies and other aspects are not mandatory or significant, and the mechanisms that implement the present techniques and technologies or its features may have different names, divisions and/or formats. Furthermore, the modules, routines, features, attributes, methodologies and other aspects of the present technology can be implemented as software, hardware, firmware or any combination of the three. Also, wherever a component, an example of which is a module, is implemented as software, the component can be implemented as a standalone program, as part of a larger program, as a plurality of separate programs, as a statically or dynamically linked library, as a kernel loadable module, as a device driver, and/or in every and any other way known now or in the future in computer programming. Additionally, the present techniques and technologies are in no way limited to implementation in any specific programming language, or for any specific operating system or environment. Accordingly, the disclosure of the present techniques and technologies is intended to be illustrative, but not limiting.

## Claims

1. An external sensor array housing for a forestry vehicle, comprising:
a pyramidal-shaped housing having a chamber in a lower section and a sensor bay portion in an upper section for housing at least one sensor of a sensor array, wherein the upper section is narrower than the lower section;
rib sections disposed on at least the exterior edges of the pyramid-shaped housing and extending from above the sensor bay to a base section of the pyramidal-shaped housing to deflect tree strikes from the sensor bay portion and spread the load of tree strikes; and
side panels around at least the lower section to deflect tree debris.

2. The external sensor array housing of claim 1, further comprising an attachment mechanism to detachably attach a lower surface of the pyramidal-shaped housing onto an exterior portion of roof of a cab of a forestry vehicle with 1) a force sufficient to restrain the pyramidal shaped housing during ordinary use of the forestry vehicle; and 2) detach the pyramidal shaped housing during a forestry vehicle rollover event.

3. The external sensor array housing of claim 2, wherein the attachment mechanism comprises a magnetic attachment mechanism that is switchable on and off.

4. The external sensor array housing of any preceding claim, where the sensor bay is configured to house a sensor module including at least one of a camera and a LIDAR.

5. The external sensor array housing of any preceding claim, wherein the chamber of the lower section is configured to house a compute unit with a signal bus connecting the sensor bay and the chamber.

6. The external sensor array housing of any preceding claim, wherein a pitch of the ribs is selected based at least in part on sensor bay size consideration and a sensor view consideration.

7. The external sensor array housing of claim 6, wherein the sensor array housing is shaped to deflect tree debris around side panels.

8. The external sensor array housing of any preceding claim, comprising interior horizontal tray sections.

9. The sensor array housing of any preceding claim, wherein the horizontal tray sections are to the rib sections.

10. The sensor array housing of any preceding claim, wherein the rib sections are tapered to have a reduced width near the sensor bay.

11. The sensor array housing of any preceding claim, wherein the rib sections have a blade-shape including a portion protruding from the edges of the pyramidal shaped housing.

12. The sensor array housing of any preceding claim, where the external sensor array housing is cantilevered.

13. An external sensor system for a forestry vehicle, comprising:
a pyramidal shaped housing having a chamber in a lower section and a sensor bay portion in an upper section housing at least one sensor of a sensor array requiring a line-of-sight view for a forestry vehicle, wherein the upper section is narrower than the lower section;
protruding ribs forming exterior edges of the pyramidal shaped housing to deflect tree strikes from the sensor bay portion and dissipate the energy of tree strikes;
side panels around at least the lower section to deflect tree debris;
electronics in the chamber to receive information from the at least one sensor and support communication with a compute unit in a cab of the forestry vehicle..

14. The sensor array housing of claim 13, further comprising an attachment mechanism to detachably attach a lower surface of the pyramidal-shaped housing onto an exterior portion of roof of a cab of a forestry vehicle with 1) a force sufficient to restrain the pyramidal-shaped housing during tree limb and tree debris impacts during ordinary use of the forestry vehicle; and 2) detach the pyramidal-shaped housing during a forestry vehicle rollover event.

15. The sensor array housing of claim 13 or 14, wherein the attachment mechanism comprises a magnetic attachment mechanism.

16. The sensor array housing of any of claims 13-15, where the sensor bay portion is configured to house a sensor module including at least one of a camera and a LIDAR.

17. The sensor array housing of any of claims 13-16, wherein the chamber of the lower section is configured to house a compute unit with a signal bus connecting the sensor bay and the chamber.

18. The sensor array housing of any of claims 13-17, wherein the lower section is configured to house non-line-of-sights sensors.

19. The sensor array of any of claims 13-18, wherein a pitch of the ribs is selected based at least in part on sensor bay size consideration and a sensor view consideration.

20. The sensor array housing of any of claims 13-19, wherein the horizontal tray sections are attached to the vertical blade sections.

21. A safety external sensor array housing for a forestry vehicle, comprising:
a pyramidal-shaped housing having a chamber in a lower section and a sensor bay portion in an upper section for housing at least one sensor of a sensor array requiring a line-of-sight view for a forestry vehicle, wherein the upper section is narrower than the lower section;
protruding ribs forming exterior edges of the pyramidal-shaped housing to deflect tree strikes from the sensor bay portion and dissipate the energy of tree strikes;
side panels around at least the lower section to deflect tree debris;
a roof section projecting the sensor bay portion; and
an attachment mechanism to attach a lower surface of the pyramidal-shaped housing onto an exterior portion of roof of a cab of a forestry vehicle during normal use but automatically detach during a forestry vehicle rollover event.

22. A safety external sensor array housing for a forestry vehicle, comprising:
a housing having a chamber in a lower section and a sensor bay portion in an upper section for housing at least one sensor of a sensor array requiring a line-of-sight view for a forestry vehicle, wherein the upper section is narrower than the lower section;
an attachment mechanism to attach a lower surface of the housing onto an exterior portion of roof of a cab of a forestry vehicle during normal use but automatically detach during a forestry vehicle rollover event.
